# EUROPEAN PATENT APPLICATION

(11) **EP 1 777 345 A1**
(43) Date of publication of application: **25.04.2007**
(21) Application number: 05425746.4
(22) Date of filing: 24.10.2005
(51) Int. Cl.: E01F 13/02, B60Q 7/00

(54) **signalling apparatus**

(71) Applicant: C.S.M. Compagnia di San Marco S.r.l., 20154 Milano (IT); Ible S.r.l., 10090 Cascine Vica - Rivoli (IT)
(72) Inventor: Bolzoni, Giuseppe, 20100 Milano (IT)
(74) Representative: Bongiovanni, Simone

(57) **Abstract**

The signalling apparatus (5) is adapted to be arranged in at least one portable container (12) transportable by a traffic service car (13). It comprises a flexible cord (6) of transparent crush-resistant plastic material and is co-extruded with a series of LEDs (16) connected together in a chain by electrical conductors (17-19). The cord (6) has an upper surface (20) provided with facets (33) to favour a good perceptions of light. The LEDs (16) are oriented in parallel direction to the axis of the cord (6) and are formed by assemblies (34, 36) directed in alternatively opposite axial direction. The apparatus 5 also comprises a device (32) for controlling brightness and blinking intermittence, and possibly a battery assembly (53) which may also work as back-up battery, if the main battery charge is lower than a predetermined value.

## Description

The present invention relates to a light signalling apparatus for road network changes, for a road traffic service or rescue motor vehicle.

As it is known, in case of an accident, obstruction of the carriageway, or other unforeseen reason, particularly on major roads or motorways, it is necessary to urgently prearrange light signals to indicate a different channelling of traffic or to indicate a danger or impediment on the carriageway. This operation is normally performed by the service or road rescue motor vehicle crew, including the police, having reached the site.

Normally, light signals for the aforesaid purposes are carried out using resin torches or naked flame lamps which are arranged on the road surface. These signals present various drawbacks. Firstly, they produce particularly thick and persistent smoke, which in foggy or rainy conditions limit visibility, creating dangerous situations for motor vehicles and persons working on the road. Furthermore, a certain time, incompatible with motor vehicle road traffic on major roads, is required to ignite the torches. Finally, the presence of naked flames makes use risky, particularly in the case of road accident rescue operations in which motor vehicles with spillage of flammable liquids may be involved.

There are also known signalling devices by means of torches or electrical lamps, normally mounted on columns, and connected to an autonomous power supply or to the public electrical mains. These devices may be satisfying for indicating prolonged road network changes, but present the drawback of being arranged at a certain distance from the ground. In the case of fog, these are arranged at a level in which the fog is thicker and more reflecting. Furthermore, the columns are rather cumbersome and may not be equipped on light motor vehicles, such as the fast police cars. Finally, the electrical torches absorb a high amount of electrical energy, whereby they cannot be kept lit by the usual batteries of the motor vehicle electrical system.

It is the object of the invention to achieve a light signalling apparatus for road network changes which is easily transportable and simple to install, and which is highly reliable and low-cost, eliminating the drawbacks in the signals of the prior art.

According to the invention, this object is reached by a light signalling apparatus for road network changes, as defined in claim 1.

For a better understanding of the invention, it will now be described a preferred embodiment by way of example, and with reference to the accompanying drawings, in which:
figure 1 is a schematic view of a car equipped with a signalling apparatus, in use, according to a first variant of the invention;
figure 2 is a perspective schematic view of the signalling apparatus, in use, according to another embodiment of the invention;
figure 3 is a perspective view of an accessory of the signalling apparatus;
figure 4 is a perspective view of two separate parts of the signalling apparatus;
figure 5 is a perspective view of a detail in figure 4, in use;
figure 6 is a perspective view of a component of the signalling apparatus, on a magnified scale;
figure 7 is a cross section of the component in figure 6, on a further magnified scale; and
figure 8 is a block diagram of the power supply device of the signalling apparatus.

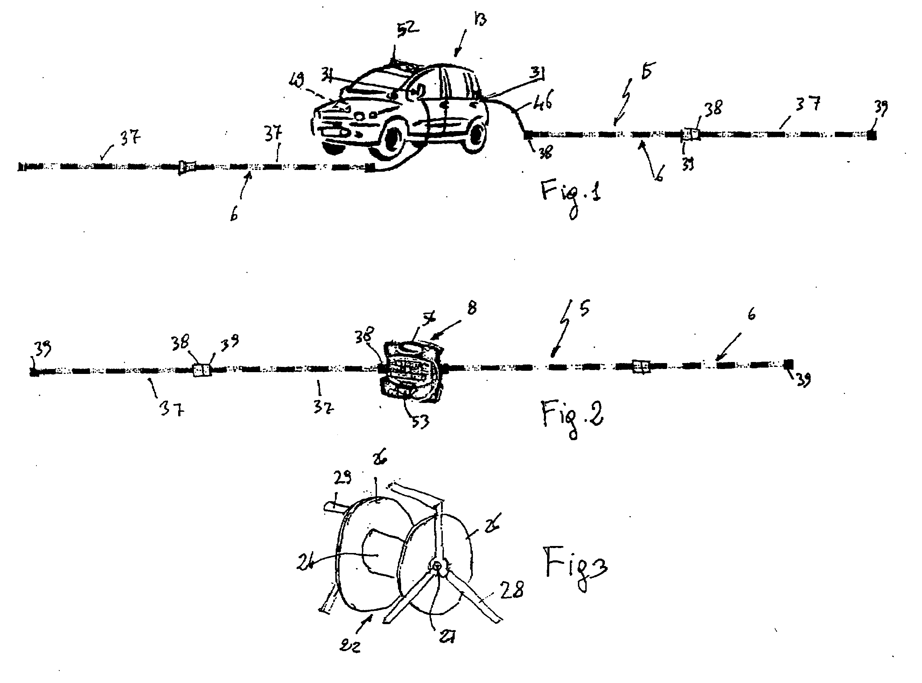

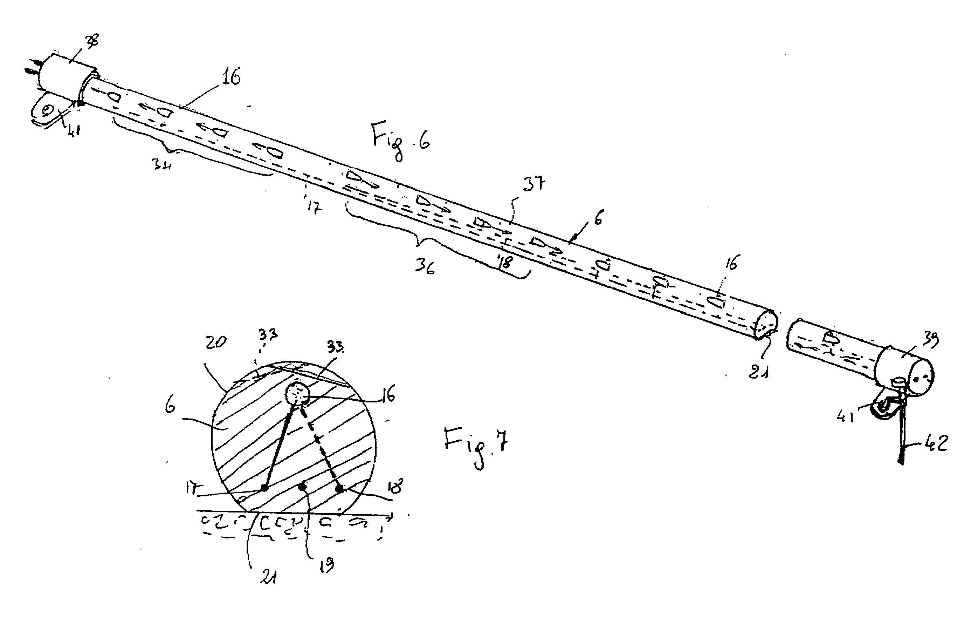

In figures 1 and 2, it is generically indicated by 5, in use, a light signalling apparatus adapted to signal a road network change. It may be used both in the case of traffic channelling or diverting, and in the case of indicating obstacles on the carriageway or obstruction of the same. The signalling apparatus 5 essentially comprises at least one flexible cord 6 provided with a series of high brightness elements 7 (figure 5) adapted to be connected to an electrical power supply device, which in the embodiment of figure 2 is generically indicated by 8.

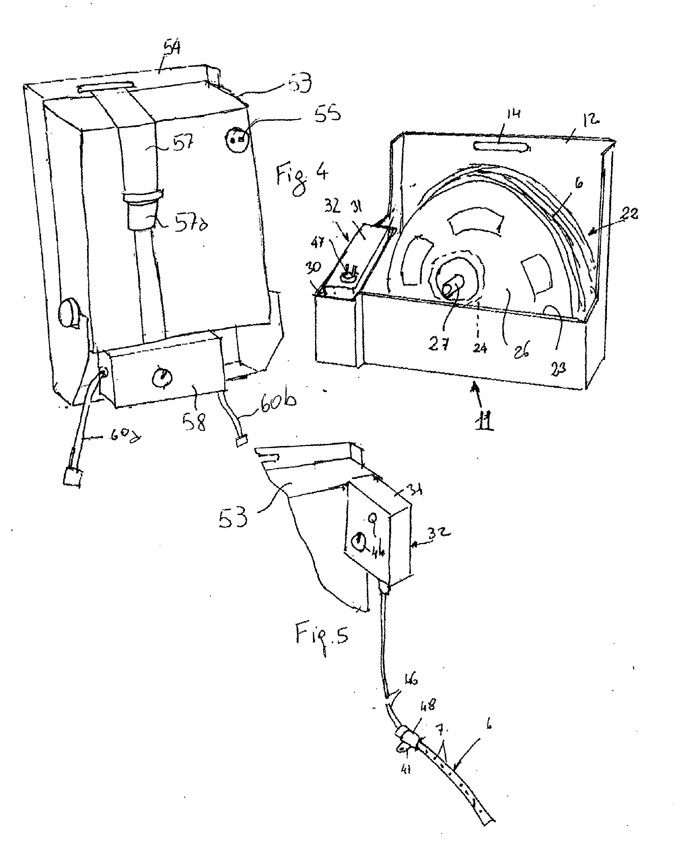

The signalling apparatus 5 may be entirely contained in one or more containers adapted to be installed aboard a service or rescue motor vehicle. Preferably, the signalling apparatus 5 is formed by at least one part 11 (figure 4) comprising the flexible cord 6, which is arranged in a corresponding container 12. This is adapted to be transported, for example, by a police or motorway traffic service car 13. As it is known, such cars are generally the first to reach the site of an accident and for this reason must be fast and therefore relatively light with reduced loading capacity with respect to the proper road rescue motor vehicles. The container 12 is of a portable type and provided with a grip 14 (figure 4) for allowing its loading, for example into the boot of the car 13, its unloading and the manual positioning for use.

The flexible cord 6 is the most important component of the signalling apparatus 5. It is made of transparent plastic material and may also be coloured, preferably ochre yellow or red. In turn, the light elements 7 consist of an equal number of light diodes or LEDs 16 (figure 6), which are connected in a chain by means of three electrical conductors 17, 18 and 19 (figure 7), of which the conductors 17 and 18 separately supply two series of LEDs 16, while conductor 19 is used for neutral.

The flexible cord 6 is co-extruded with the respective LED chain 16, that is the LEDs 16 with conductors 17-19 are incorporated, as inserts, in the plastic material of the cord 6 during extrusion, so as to be totally covered by the plastic material. Preferably, the cord 6 presents a polygonal or circular section as in figure 7. In that case, the cord 6 presents a flat or faceted lower surface 21, which is adapted to rest on the ground, defining the resting position of the cord 6. This also presents an upper outer surface 20, through which the LEDs 16 are visible.

As the flexible cord 6 in use is in any case subject to the accidental transit of motor vehicles, the type of material and the respective dimensioning of the cord 6 must be chosen so as to withstand squeezing. Furthermore, it is suitable to incorporate the conductors 17-19 in parallel position to the axis of the cord 6, without superimposition, as shown in figure 7. Advantageously, the material of the cord 6 may be PVC, resistant to rain or snow in addition to squeezing. Furthermore, the material of the cord 6 must be compatible with hydrocarbons, that is must not be corroded by the hydrocarbons of fuels to prevent sparking combustion.

Normally, the cord 6 is wound on a coil 22 (figures 3 and 4) adapted to be removably accommodated in a compartment 23 of the container 12. The coil 22 is formed by a drum 24 provided with two flanges 26 having corresponding rotation pins 27. Preferably, the coil 22 is associated with a support 28 on which, in use, the two pins 27 may be turnably mounted with the axis essentially in horizontal position. In that case, at least one of the two flanges 26 carries a handwheel 29 to facilitate winding and unwinding of the cord 6.

Preferably, the support 28 is provided with a grip 25 and accommodated separately from the coil 22. Alternatively, the support 28 may be accommodated in the container 12. In turn, the container 12 is provided with another compartment 29, in which it is accommodated a prismatic box 31 containing a control device 32 of the LEDs 16, which will be better described below.

As it is known, the LEDs 16 are high brightness diodes and work at relatively low temperatures, with low electrical energy absorption. In the event of fog, the thermal gradient of the atmosphere on the asphalt is such that the fog is less dense in proximity of the ground. The arrangement of the cord 6 on the road surface ensures excellent visibility of the LEDs 16 also in the event of fog while the high brightness reduces the halo effect.

As the LEDs 16 output essentially one-way light, they are prearranged in the cord 6 so as to direct the light beam parallelly to the axis of the cord 6 itself. Furthermore, the LEDs 16 are preferably oriented some in one direction and some in the opposite direction along such axis, as shown by the arrows in the figure 6, in order to be visible from both directions of travel of the road. In turn, the outer upper surface 20 of the cord 6 may be provided, at each LED 16, with a facet 33 (figure 7). In particular, the facets 33 are variably oriented with respect to the axis of the cord 6 itself to ensure a good perception of the light, also laterally.

Preferably, the LEDs 16 may be assembled on the cord in pairs of assemblies 34, 36 (figure 6), in which the LEDs 16 of each assembly 34, 36 are oriented in the same direction, and the LEDs 16 of the two assemblies 34, 36 of the pair are oriented alternatively in the two opposite directions along the axis of the cord 6. In particular, each assembly 34, 36 may be formed by four reciprocally equally distanced LEDs 16. In turn, also the pairs of assemblies 34, 36 are equally distanced.

For constructive reasons, each cord 6 may be formed by one or more segments 37 (figures 1 and 2) of predetermined length, for example 10 metres. Possibly, more than one segment 37 can be wound on the same coil 22 (figure 3). Each segment 37 is provided at the two ends with two electrical connectors 38 and 39, so as to allow the serial connection of several segments 37, in order to obtain a modular length of the flexible cord 6. Finally, each segment 37 of cord 6 may be equipped at each end with a member capable of favouring anchorage to the ground, for example a ring or perforated plate 41, carried by each connector 38, 39. The hole of each plate 41 is adapted to be engaged by a pin 42 to be fastened to the ground.

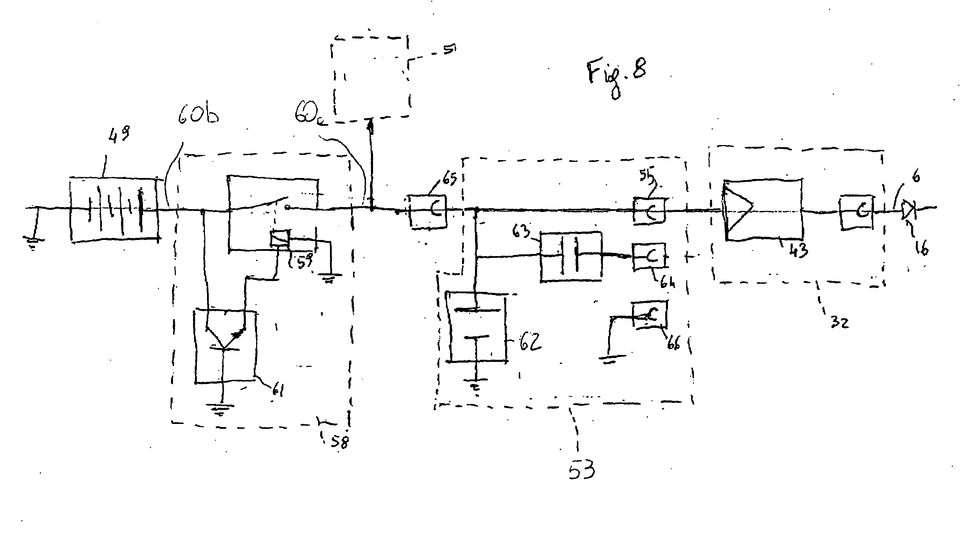

The box 31 (figures 4 and 5) of each control device 32 can be extracted from the compartment 30 to connect the power supply device 8. The control device 32 comprises a control circuit 43 (figure 8), adapted to adjustably control the brightness and the intermittence of the LEDs 16.

The circuit 32 is adjusted by corresponding knobs 44 operatable from outside the box 31, and adapted to set both the brightness of the LEDs 16, and the frequency of the blinking cycles of the LEDs 16 and the duration of each blink. Preferably, the control device comprises electromagnetic radiation receiving means, for example infrared beams or radiofrequency, to remotely adjust the brightness and intermittence of the LEDs 16 by means of a remote control.

The control device 32 is adapted to be connected to the connector 38 of a segment 37 of the cord 6, by means of an electrical wire 46 external to the box 31, and is adapted to be connected, by means of an electrical plug 47, external to the box 31, to an electrical socket 48 of the power supply device 8.

The power supply device 8 may exclusively comprise a main battery 49 to power the usual electrical system of the car 13 (figure 1). In that case, the electrical socket may be the cigar lighter of the car 13. If the car 13 is provided with two cigar lighter sockets, one on the dashboard and one at the rear seats, two containers 12 may be provided each with a flexible cord 6 and with a box 31 of the respective control device 32, so as to allow the simultaneous use of two different light signalling cords 6, as shown in figure 1.

In the case of service or rescue cars 13, the electrical system comprises both generic loads, not shown, such as tail lights, dashboard lights, etc., and specific loads 51, such as radio transmitters, signalling lights, sirens and emergency light indicators like the usually light bar 52 shown in figure 1. It is thus useful to have the possibility of disconnecting the specific loads 51 in order to avoid exhausting the battery 49 itself and making it impossible to start the engine of the car 13.

Advantageously, the power supply device 8 comprises a battery assembly 53 (figure 4) arranged on a frame 54 which may be permanently fitted in the boot of the car 13. The frame 54 also supports a switching unit 58, which will be better described below, and is connected both to the specific loads 51 and to the main battery 49 via respective wires 60a, 60b.

In particular, the battery assembly 53 presents an electrical socket 55 which may be connected via the plug 47 of the box 31 with the corresponding control device 32 of the cord 6 (figure 5). In that case, the apparatus 5 may operate independently from the car 13, as shown in figure 2.

Preferably, the battery assembly 53 is removably fastened to the frame 54 for example by means of a belt 57 provided with a snap buckle 57a.

The switching unit 58 (figure 8) connects the battery assembly 53 to the main battery 49 and essentially comprises a relay 59, which is controlled by an electrical control unit 61 so as to disconnect the specific loads 51 from the battery 49 when the battery charge 49 drops below a predetermined value, for example sufficient to allow starting the engine of the car 13.

Furthermore, in this case, the electronic control unit 61 controls the sending of a warning signal, for example a light signal, to indicate to the crew of the car 13 that the battery charge 49 has dropped under the minimum allowed.

The battery assembly 53 comprises a battery 62 for powering the cord 6 via the electrical socket 55, a capacitor pack 63 connected in series to the battery 62 and an electrical starting socket 64 connected in series to the capacitor pack 63. The battery assembly 53 finally comprises a socket 66 for connection to earth.

The special loads 51 and the main battery 49 are connected in parallel with respect to the battery assembly 53.

The operation of the signalling apparatus 5 is as follows.

When the car 13 (figures 1-3) reaches the site where road network changes are needed, the crew of the car 13 takes from the boot one or two containers 12 of cord 6 and possibly the support(s) 28 of the coils 22 of the cords 6. Then, the cords 6 are unwound from the coils 22 and are connected together as needed through the connectors 38, 39.

Firstly, it is assumed that the power supply device 8 consists of the main battery 49 of the car 13. In that case, it will suffice to connect each box 31 of the control device 32 with the corresponding cigar lighter socket to power the respective cords 6. The cords 6 thus powered are arranged in the required position on the road surface and are fastened to the ground using stakes 42 (figure 6).

If the power supply device 8 comprises the battery assembly 53, the battery assembly 53 may be released from the frame 54 and the switching unit 58 and may be arranged in a required position independently from the position of the car 13 (as shown in figure 2). The box 31 of each control device 32 is now plugged into the socket 55, while the wire 46 (figure 5) is connected to the connector 38 of the respective cord 6. One then proceeds as in the previous case to arrange the cords 6, which in this case are powered exclusively by the battery assembly 53.

When the main battery 49 voltage drops under the minimum limit, the special loads 51 are disconnected and powered by the battery assembly 53 if this is aboard the car 13 and connected to the switching unit 58. In this way, the special loads 51 may be powered until the battery 62 is exhausted.

When the cord 6 is operative, the charge condition of the battery 62 is preferably indicated by an increase of the ignition frequency of the LEDs 16.

Re-starting of the internal combustion engine of the car 13 automatically restores power to all loads, particularly also to the special loads 51, by the main battery 49, and recharges the battery assembly 53.

Furthermore, the ignition socket 64 may be connected to the main battery 49 to start the engine of the car 13 when the main battery 49 is flat.

The advantages of the signalling device according to the invention with respect to the known signalling systems are apparent from the above description. In particular, the apparatus 5 is easily transportable also by a car for transporting people also thanks to the fact that the light cord 6 is flexible and therefore has reduced dimensions. Furthermore, the light cords 6 can be arranged and made operative very quickly. Finally, the arrangement of cords 6 on the ground and the use of LEDs 16 make the indication easily visible and efficient also in the case of rain and fog.

It is understood that the signalling device described may be changed and perfected without departing from the scope of the claims. For example, the cord 6 may have a different length and/or section from that descripted above and the LEDs 16 may be arranged on several rows or in differently arranged assemblies. Finally, the control device 32 may be changed and envisage other settings. Finally, the fastening stakes may be omitted or replaced by other fastening means.

## Claims

1. A light signalling apparatus for road network changes for a road traffic service or rescue motor vehicle; **characterised in that** it comprises a flexible cord (6) provided with a series of high intensity brightness elements (7), said elements (7) being adapted to be connected to an electrical power supply device (8), said cord (6) and said device (8) being adapted to be transported by said motor vehicle.

2. An apparatus according to claim 1, **characterised in that** said elements (7) consist of LEDs (16) electrically connected together in a chain.

3. An apparatus according to claim 2, **characterised in that** said cord (6) is made of transparent squeeze-resistant plastic material, said cord (6) being co-extruded with said LEDs (16) thus connected.

4. An apparatus according to claim 3, **characterised in that** the connection in a chain of said LEDs (6) is obtained by means of at least two wires (17, 18), which are incorporated in said cord (6) in parallel position without superimpositions.

5. An apparatus according to claim 3 or 4, **characterised in that** said cord (6) is formed by a material resistant to rain and/or combustion of hydrocarbons.

6. An apparatus according to claim 5, **characterised in that** said cord (6) has a flat surface (21) resting on the ground and an upper surface (20) through which said LEDs (16) are visible.

7. An apparatus according to claim 6, **characterised in that** said cord (6) has a polygonal or at least in part circular section, said upper surface (20) being equipped with facets (33) so as to ensure a good perception of light from any direction.

8. An apparatus according to one of the claims from 2 to 7, **characterised in that** said LEDs (16) are oriented according to a direction parallel to the axis of said cord (6).

9. An apparatus according to claim 8, **characterised in that** said LEDs (16) are arranged at a predetermined distance to form a series of reciprocally equally distanced assemblies (34, 36).

10. An apparatus according to claim 9, **characterised in that** the assemblies (34, 36) of said LEDs (16) are oriented in alternatively opposite direction along a longitudinal axis of said flexible cord (6).

11. An apparatus according to one of the claims from 8 to 10, **characterised in that** said LEDs (16) are yellow or red.

12. An apparatus according to one of the preceding claims, **characterised in that** it comprises a control device (32) presenting remote electromagnetic signal receiving means for controlling light intensity and/or intermittence of said assemblies (34, 36) of LEDs (16).

13. An apparatus according to claim 12, **characterised in that** it comprises a coil (12) about which said cord (6) is wound and a portable container (12) accommodating said coil (22), said control device (32) being removably accomodated in said container (12).

14. An apparatus according to one of the claims 12 or 13, **characterised in that** said control device (32) comprises an electrical socket (47) adapted to be connected to an electrical system of said motor vehicle.

15. An apparatus according to one of the preceding claims, **characterised in that** it comprises a switching unit (58) adapted to be connected to a main battery (49) and at least one electrical load (51), and a battery assembly (53) dismountably connected to said switching unit (58) and to said flexible cord (6), said switching unit (58) being adapted to allow the recharging of said battery assembly (53).

16. An apparatus according to claim 15, **characterised in that** said switching unit (58) comprises switching means (59) adapted to disconnect said electrical load (51) and said battery assembly (53) from said main battery (49), and a control unit (61) adapted to control said switching means (59) according to the charge of said main battery (49).

17. An apparatus according to one of the claims 15 or 16, **characterised in that** said battery assembly (53) comprises a first battery (62) for powering said flexible cord (6) and said electrical load (51), and a second battery (63) for allowing the engine of said motor vehicle to be started.

18. An apparatus according to any one of the preceding claims, **characterised in that** said cord (6) comprises at least two segments (37), each segment (37) being provided at each end with an electrical connector (38, 39) to allow connection in series thereof.

19. An apparatus according to claim 18, **characterised in that** at least one of said segments (37) is adapted to be fixed onto the road by means of blocking elements (41, 42).
